Europäisches Patentamt

European Patent Office

Office européen des brevets

(11) Publication number: **0 333 267**
A1

## (12) EUROPEAN PATENT APPLICATION

(21) Application number: 89200607.3

(51) Int. Cl.⁴: **B62D 25/20** , **B62D 29/04**

(22) Date of filing: 10.03.89

(30) Priority: 16.03.88 NL 8800641

(43) Date of publication of application:
20.09.89 Bulletin 89/38

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Sonnema, Fedde
Reinoudflat 89
NL-6136 DL Sittard(NL)
Inventor: Van den Berg, Marinus Hubertus
Nicolaas
Ankersweg 2
NL-6123 AG Born(NL)
Inventor: Pfletschinger, Elmar
Via Prudenziana 10
Como(IT)

(54) Rear floor for motorcar.

(57) The invention relates to a plastic rear floor (2) for
a motorcar (1), comprising two substantially horizon-
tal parts which are rigidly interconnected with some
spacing into a box-shaped structure and is characterized in that the structure extends partly before
the rear axle (3) and partly behind it, and in that the
space between the horizontal parts comprises func-
tional components.

Xerox Copy Centre

# REAR FLOOR FOR MOTORCAR

The invention relates to a plastic rear floor for a motorcar, comprising two substantially horizontal parts which are rigidly inter-connected with some spacing into a box-shaped structure.

Such a rear floor is described in for instance Machine Design, May 22, 1986. The floor in question is a part behind the rear axle. In the free space in the box-shaped structure a spare wheel can be stored.

In the automotive industry there is a great need for plastic components which, owing to a high degree of integration, can replace many metal components.

The invention provides a rear floor which allows of this desired integration.

The invention relates to a plastic rear floor for a motorcar, comprising two substantially horizontal parts which are rigidly inter-connected with some spacing into a box-shaped structure and is characterized in that the structure extends partly before the rear axle and partly behind it, and in that the space between the horizontal ports comprises functional components.

The rear floor according to the invention offers the additional advantages that a maintenance free bottom is provided and that a large component can be manufactured separately. The final assembly of the complete motorcar thus takes much less time.

The substantially horizontal parts are spaced at least 5 cm, preferably at least 8 cm, because then the desired rigidity can be achieved. Unexpectedly it appears that the contribution to the rigidity of the complete motorcar is comparable with that of a normal steel bottom. It is also of importance then to connect the box-shaped structure well with the steel chassis. In particular, the horizontal parts are spaced at intervals of between 15 and 30 cm. Depending on the geometry, the spacing may differ from place to place.

The space between the horizontal parts - which may comprise several sections - can be used very advantageously to accommodate functional components, such as by preference the petrol tank. Owing to the firm casing already available now, a weight reduction of two thirds can be achieved. Additionally, the exhaust pipe can be led between the horizontal parts. This considerably reduces corrosion from outside, while in addition extra soundproofing is obtained. It may be necessary, however, to admit cooling air. The spare wheel can also be accommodated in the space.

It is of great advantage that the smooth lower side of the box-shaped structure gives better streamlining, so that the air resistance is reduced.

The horizontal parts are preferably in part provided with ribs, corrugates profiles and the like, in order to prevent buckling of the plate-shaped parts.

The rear floor can be manufactured very well from one or more fibre-reinforced plastics. Suitable plastics are for instance thermosetting resin systems, such as for instance unsaturated polyester resin or polyurethane resin, but also thermoplastics such as polypropylene or polyvinyl chloride and RIM nylon. Glass fibres are preferably used as fibre reinforcing material, but for special requirements carbon or aramide fibres can also be used.

The invention will be further elucidated with reference to the following figure, presenting a survey of a rear floor in a part of a motorcar.

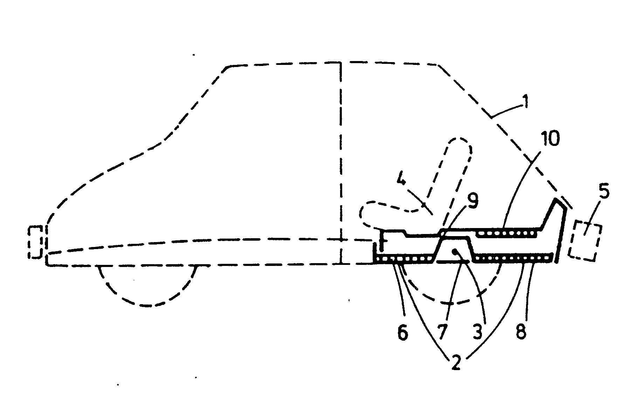

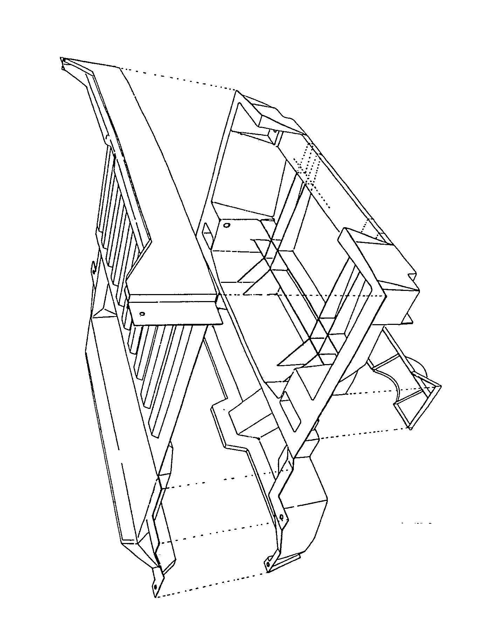

In the figure, (1) is the motorcar with a rear floor (2) extending from before the rear axle (3), here approximately from the front side of the rear chair (4), to the rear bumper (5). According to present views the rear axle should be easily accessible for mounting and maintenance. That is why in this case a lower side comprising parts (6, 7 and 8) was opted for, with (6) and (8) via (9) being made from one piece. If flat section (7) were not present, the rigidity at (9) would be too low, with a risk of rupture. (9) does provide a good attachment point for safety belts. The rear side of the upper part (10) is provided with attachment points for the bumper (5) and has space for the backseat (4) before the rear axle.

Example

According to the accompanying drawing a rear floor was made from glassfibre-reinforced polyester resin, employing a squeeze-moulding technique. After assembly of the three components the construction was built into a motorcar, representative by the standards of the state of the art, from which the metal parts to be replaced had been removed. The rigidity of this motorcar in torsion and bending experiments was equal to that of the car with the steel floor.

If the metal parts to be replaced were made of 3 mm thick glassfibre-reinforced thermoset polyester, without further shape modifications, the rigidity compared with the motorcar with a steel floor would decline to 40-50% of the original value.

## Claims

1. Plastic rear floor for a motorcar, comprising two substantially horizontal parts which are rigidly interconnected with some spacing into a box-shaped structure and is characterized in that the structure extends partly before the rear axle and partly behind it, and in that the space between the horizontal parts comprises functional components.

2. Rear floor according to claim 1, characterized in that the horizontal parts are spaced at least 5 cm.

3. Rear floor according to any one of the claims 1-2, characterized in that the horizontal parts are made from more than one piece.

4. Rear floor according to any one of the claims 1-3, characterized in that the space between the two horizontal parts contains the fuel tank.

5. Rear floor according to any one of the claims 1-4, characterized in that the space between the two horizontal parts contains the rear axle.

6. Rear floor according to any one of the claims 1-5, characterized in that the space between the two horizontal parts contains part of the exhaust pipe.

7. Rear floor according to any one of the claims 1-6, characterized in that the horizontal parts are in part provided with ribs and/or a corrugated profile.

8. Rear floor according to any one of the claims 1-7, characterized in that it is made from glassfibre-reinforced polypropylene, RIM nylon, polyester or polyurethane.

9. Motorcar provided with a rear floor according to any one of the claims 1-8.

10. Motorcar according to claim 9, with the rear floor rigidly attached to the steel chassis.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 035 644 (V.W.)<br>* Page 7, paragraph 1; figure 1; claim 1 * | 1,3,8 | B 62 D 25/20<br>B 62 D 29/04 |
| A | PATENT ABSTRACTS OF JAPAN, vol. 6, no. 263 (M-181)[1141], 22nd December 1982;<br>& JP-A-57 155 164 (NITSUSAN SHIYATAI K.K.) 25-09-1982 | 1,2,7 | |
| A | ATZ AUTOMOBILTECHNISCHE ZEITSCHRIFT, vol. 82, no. 4, April 1980, pages 187-198, Stuttgart, DE; H. BARSKE et al.: "Das Audi-Konzept für die Entwicklung eines zukünftigen Personenwagens mit erhöhtem Nutzwert"<br>* Figure 3, page 191 * | 1,6 | |
| A | MASCHINE DESIGN, vol. 58, no. 12, 22nd May 1986, pages 68-71, Penton Publishing, Inc., US; S. SIKES: "Stampable plastic composites gaining ground"<br>* Page 68, quoted in the application * | 1 | |
| A | FR-A-2 279 605 (DAIMLER-BENZ)<br>* Page 1, lines 1-22 * | 1 | |

TECHNICAL FIELDS
SEARCHED (Int. Cl.4)

B 62 D

The present search report has been drawn up for all claims

| Place of search | Date of completion of the search | Examiner |
|---|---|---|
| THE HAGUE | 01-06-1989 | PIRIOU J.C. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
............................................................................
& : member of the same patent family, corresponding
     document

EPO FORM 1503 03.82 (P0401)